# FASCICULE DE BREVET EUROPEEN

(11) **EP 0 381 605 B1**
(45) Date de publication et mention de la délivrance du brevet: **15.05.1996**
(21) Numéro de dépôt: 90440008.2
(22) Date de dépôt: 02.02.1990
(51) Int. Cl.: B60P 3/08

(54) **Plateau individuel porteur notamment pour un véhicule porte-voitures**
Einzel-Ladefläche, insbesondere für Kraftfahrzeugtransporter
Individual loading platform, in particular for a motor vehicle carrier

(30) Priorité: 03.02.1989 FR 8901588
(43) Date de publication de la demande: 08.08.1990
(73) Titulaire: LOHR INDUSTRIE, F-67980 Hangenbieten (FR)
(72) Inventeur: Gonin, André, F-67310 Wasselonne (FR); Ganter, Didier, F-67200 Strasburg (FR)
(74) Mandataire: Metz, Paul

(56) Documents cités:
- EP-A- 0 356 359
- FR-A- 2 290 325
- FR-A- 2 606 716
- US-A- 4 668 141

## Description

La présente invention se rapporte à un plateau porteur individuel mobile destiné plus particulièrement à un véhicule porte-voitures en vue d'augmenter sa capacité de chargement.

Afin d'augmenter la capacité des véhicules porte-voitures, les constructeurs sont contraints d'utiliser au mieux les possibilités d'imbrication des voitures. Pour gagner encore en capacité, il y a lieu non seulement d'exploiter toutes les possibilités que réservent les espaces vides, les retraits et, de façon générale, tous les volumes libres, pour y loger, le temps du transport, telle ou telle partie saillante de la ou des voiture(s) voisine(s), mais aussi d'imaginer puis de réaliser des plateaux porte-voitures adaptés qui permettent de rapprocher encore plus les voitures transportées les unes des autres.

De plus, les inclinaisons possibles des plateaux porteurs vers l'avant ou vers l'arrière permettent, en utilisant au mieux les formes et les dimensions des voitures adjacentes supérieures et inférieures, de gagner encore en coefficient de remplissage.

Aux impératifs d'encombrement viennent s'ajouter les précautions de sécurité liées à la nature des produits transportés qui, dans le cas de voitures, représentent autant d'unités fonctionnelles fragiles, lourdes, susceptibles de se déplacer, et de grande valeur commerciale.

Ainsi, parallélement aux gains en encombrement, il s'avère nécessaire d'assurer le maximum de sécurité nécessaire pour éviter d'endommager les carrosseries des voitures transportées.

On connaît déjà des plateaux individuels porteurs présentant un évidement entre deux structures transversales.

La demande européenne publiée EP-A-0 356 359 du même déposant divulgue l'existence d'un plateau porteur individuel pour ensembles porteurs et de levage d'un véhicule sur une unité porte-véhicules, plateau constitué d'une structure générale en cadre formé à partir de deux longerons, présentant :
. à l'une de ses extrémités un platelage délimité par une traverse d'extrémité et une traverse de fin de platelage,
. à son autre extrémité une structure transversale de soutien des roues.

Selon cette publication, d'une part l'espace situé entre le platelage et la structure transversale est un évidement définissant un espace libre délimité par les deux longerons du cadre, la traverse de fin de platelage et la structure transversale, et d'autre part la structure transversale est de faible largeur de manière à soutenir localement un train de roues avant ou arrière.

Ce type de plateau ne comporte ni zone centrale libre, ni zone de dégagement du côté du platelage.

On indique ainsi dans le corps de la description (colonne 14 lignes 33 à 47) que la longueur des plateaux à encastrement est réduite par rapport aux plateaux à platelage continu.

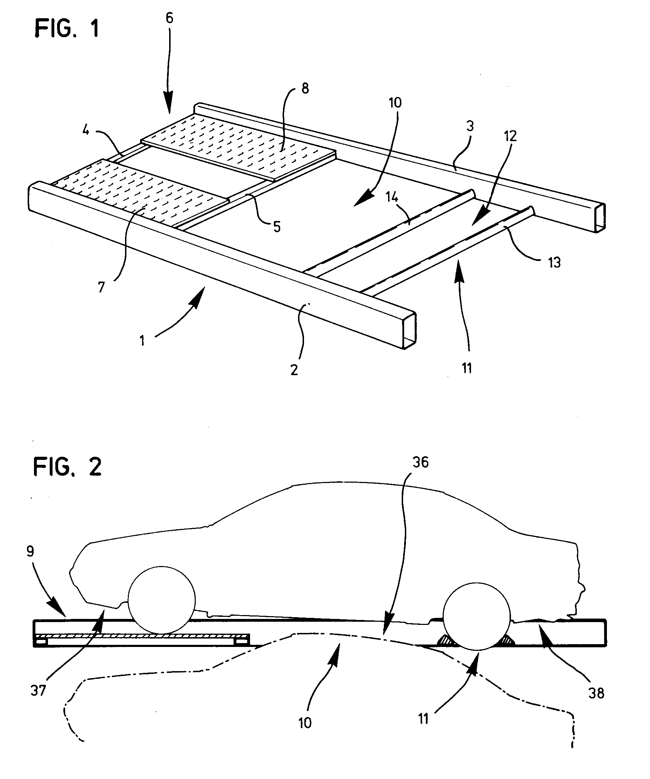

Si, comme on peut le remarquer sur les figures 1, 2 et 3 de cette publication, la longueur totale est réduite par rapport aux autres plateaux, l'évidement est court et le platelage occupe la majeure partie de la longueur.

Dans ces conditions, il ne peut exister ni de passage constitué par la zone centrale pour une partie saillante du véhicule inférieur, ni de zone de dégagement du côté du platelage, quel que soit l'empattement du véhicule porté.

La présente invention a pour but d'assurer simultanément la forte augmentation en capacité recherchée, et une grande facilité de mise en oeuvre des plateaux en vue de diminuer notablement le temps du chargement et le coût du transport ramené à chaque voiture.

A cet effet elle se rapporte à un plateau porteur mobile en forme de cadre prédisposé à et favorisant l'imbrication des voitures transportées caractérisé en ce que le cadre présente à l'une de ses extrémités un platelage délimité par deux traverses, un évidement central définissant un espace libre en partie centrale et à son autre extrémité une structure transversale de soutien et de blocage, le platelage et la structure étant disposés de façon à libérer des zones de dégagement à l'avant et à l'arrière au-delà des roues.

De nombreux avantages résultent de la mise en oeuvre du plateau mobile selon l'invention dans le cas d'un véhicule porte-voitures. On en citera ci-après les principaux :
. grand gain en capacité : encombrement minimal pour un gain de place maximal ;
. possibilité de réaliser des associations multiples en suite linéaire ;
. rangement des plateaux par superposition lors du roulage à vide réduisant la prise au vent ;
. grande mobilité et variété d'inclinaisons ;
. rapprochement des voitures entre elles et réduction simultanée des risques de chocs et d'endommagement des voitures transportées .

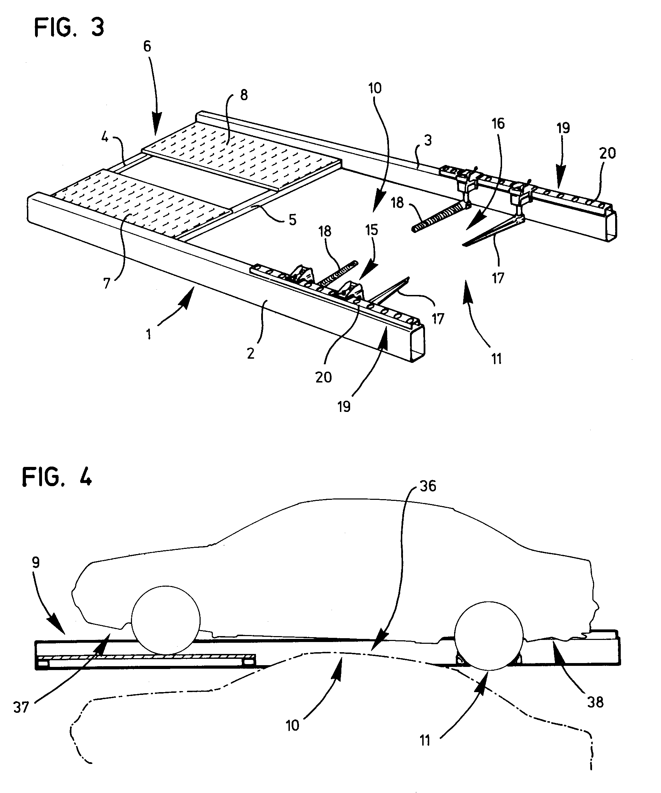

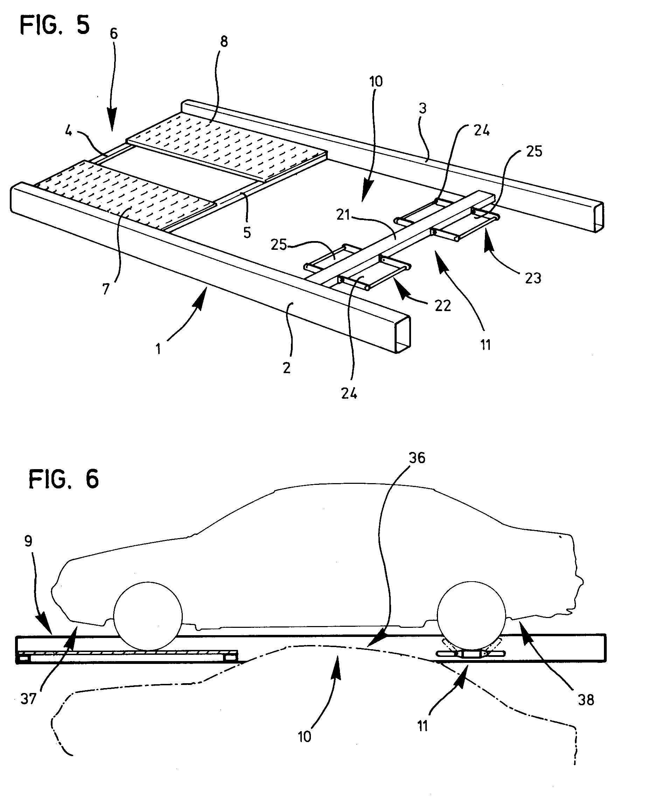

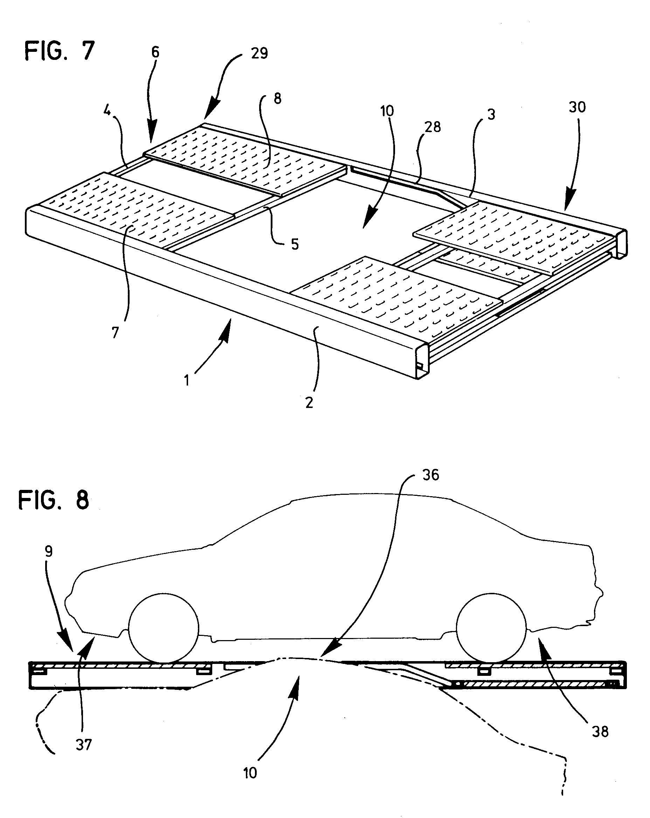

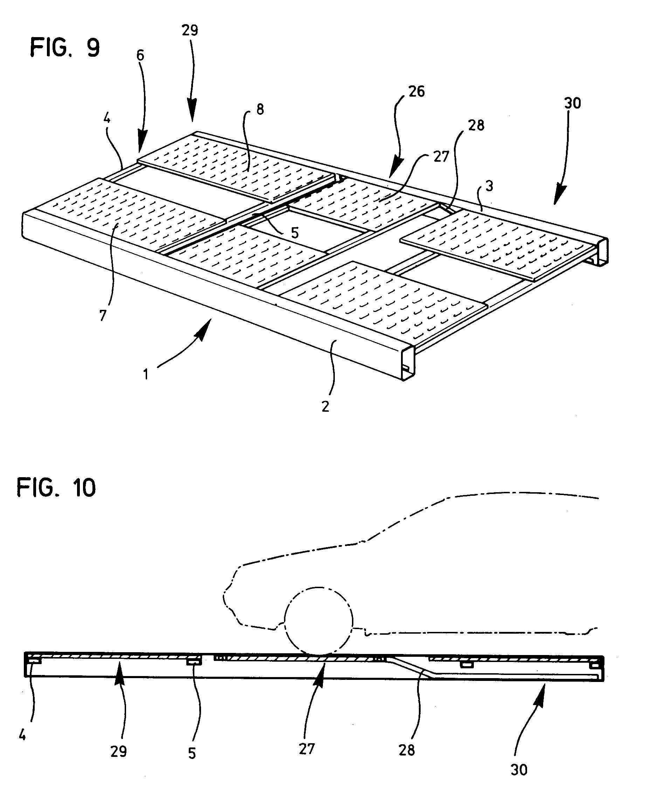

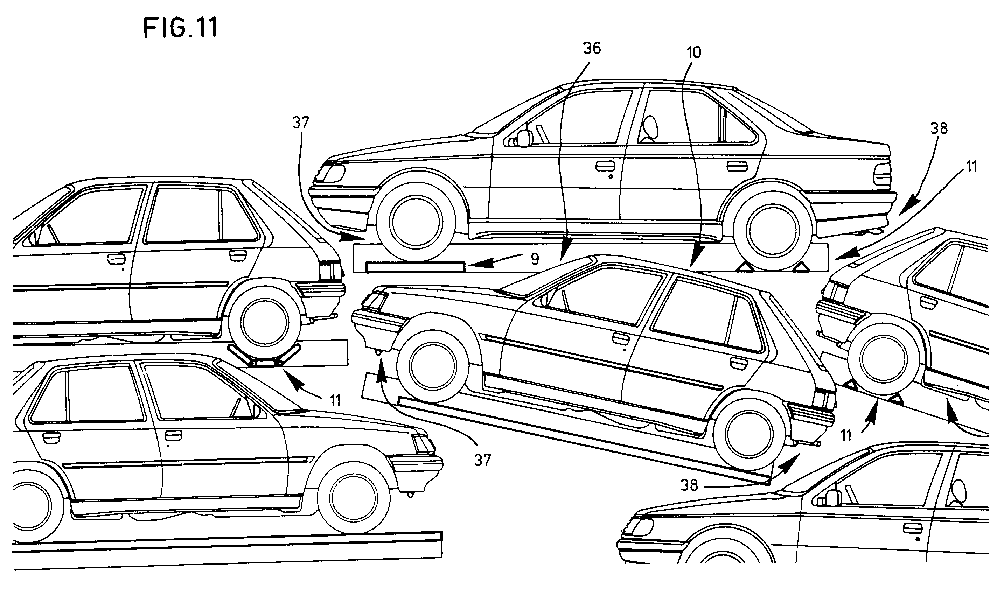

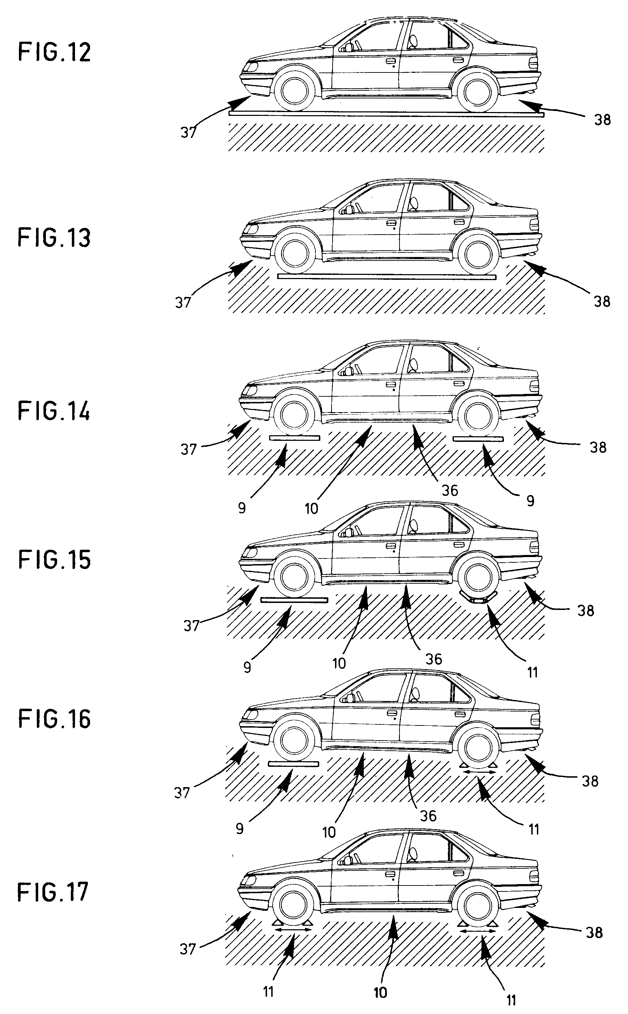

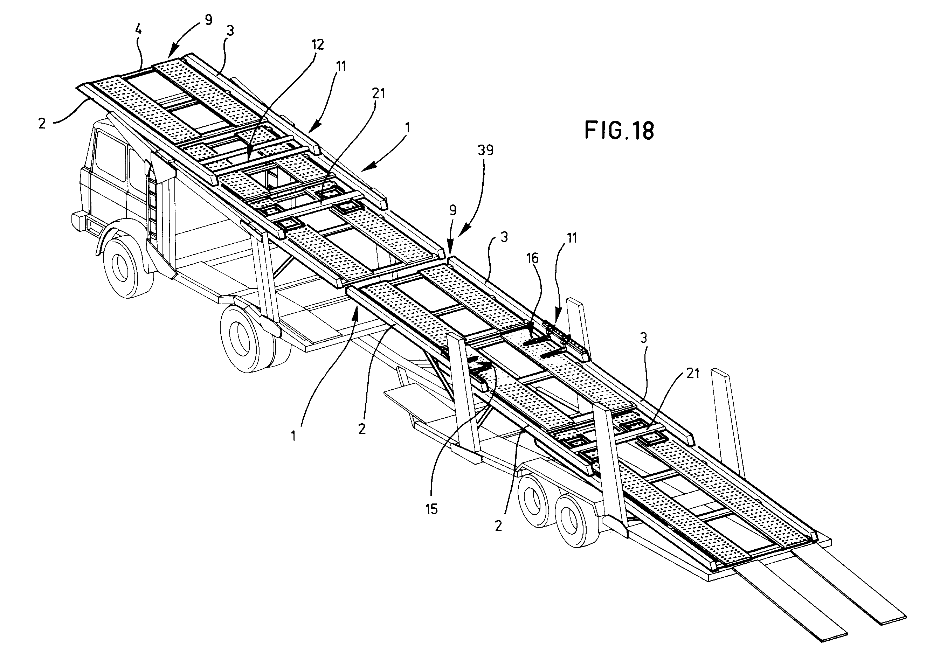

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue en perspective schématique simplifiée d'un plateau à évidement central délimité de part et d'autre par un platelage et une structure de soutien à barre double ;
. la figure 2 est une vue en coupe longitudinale correspondant à la figure 1 montrant une voiture chargée et l'encastrement de la voiture inférieure ;
. la figure 3 est une vue en perspective schématique simplifiée d'un plateau à évidement central délimité de part et d'autre par un platelage et une structure de soutien à deux supports individuels en forme de pinces ;
. la figure 4 est une vue en coupe longitudinale correspondant à la figure 3 montrant une voiture chargée et l'encastrement de la voiture inférieure ;
. la figure 5 est une vue en perspective schématique simplifiée d'un plateau à évidement central délimité de part et d'autre par un platelage et une structure de soutien comprenant une traverse et deux cales articulées sur celle-ci ;
. la figure 6 est une vue en coupe longitudinale correspondant à la figure 5 montrant une voiture chargée et l'encastrement de la voiture inférieure ;
. les figures 7, 8, 9 et 10 sont des vues en perspective puis en coupe longitudinale d'un plateau à évidement central obturable par un platelage central escamotable respectivement en place et à l'état escamoté ;
. le figure 11 est une vue de profil montrant une partie d'un chargement relatif à un exemple de disposition possible en utilisant plusieurs variantes de plateaux selon l'invention ;
. les figures 12 à 17 sont des vues de profil illustrant par des zones hachurées l'augmentation du dégagement sous la voiture selon les différentes structures transversale porteuses utilisées :
   . figure 12 : plateau long sans évidement central
   . figure 13 : plateau court sans évidement central
   . figure 14 : plateau à deux platelages sous chaque train de roues
   . figure 15 : plateau à platelage avant et structure transversale porteuse arrière à cales pivotantes
   . figure 16 : plateau à platelage avant et à structure déplaçable arrière à pinces
   . figure 17 : plateau à deux ensembles porteurs déplaçables à pinces selon l'empattement de la voiture
. la figure 18 est une vue illustrative en perspective montrant un véhicule porte-voitures dans sa totalité sur lequel plusieurs plateaux mobiles se succèdent pour former une rampe.

L'idée générale inventive consiste à réaliser un plateau porteur mobile pour le soutien de voitures pendant leur transport, dont les structures interfèrent le moins possible avec les carrosseries des voitures adjacentes transportées. Autrement dit, un plateau dont les structures constituent le moins d'obstacle possible dans l'espace utile environnant afin de pouvoir bénéficier du maximum de dégagement possible autour de la voiture portée.

Ce dégagement est mis à profit pour loger les parties saillantes des voitures voisines et gagner ainsi en capacité de chargement.

Selon la caractéristique principale de ce type de plateau mobile, au moins la partie centrale est laissée libre pour constituer le passage d'accès à un volume libre destiné à accueillir l'une ou l'autre partie saillante de la voiture inférieure ou des voitures voisines dans l'espace d'empattement de la voiture portée par le plateau ou dans l'espace libre sous le moteur ou sous le coffre.

Le plateau comporte à l'une de ses extrémité des structures d'immobilisation d'un des trains de roues de préférence avec autocentrage et à son autre extrémité un support continu d'une longueur suffisante pour absorber les variations d'empattement des différents modèles de voitures.

On décrira ci-après quelques exemples de réalisations de plateaux mobiles conformes à l'idée générale inventive en application à des véhicules porte-voitures.

Bien entendu, l'invention se montre indépendante de toutes les variétés d'applications et on signale à cet effet, des applications possibles en plateau élévateur, en monte-charge, en matériel de manutention et autres.

Le plateau, dans sa version de base et dans ses différentes variantes, présente une structure générale en cadre 1 formé de deux longerons 2 et 3 reliés mécaniquement par des traverses 4 et 5.

Entre ces deux traverses s'appuie un support 6 formé de deux plaques de roulement 7 et 8, par exemple en tôle perforée ou en matériau anti-dérapant, pour réaliser un platelage 9 soutenant le train avant ou arrière de la voiture transportée et permettant d'absorber les variations d'empattement des différents modèles de voitures.

Le plateau se poursuit vers son autre extrémité par un évidement central 10 définissant un espace libre délimité par les deux longerons 2 et 3 et la traverse de fin de platelage et une structure transversale de soutien et de blocage 11 fixe ou mobile de l'autre train de roues. On constitue ainsi un espace central libre pour le passage d'une partie saillante d'une voiture voisine: toit, extrémité de coffre ou de capot d'une voiture.

Comme indiqué, l'autre extrémité plateau est équipée de la structure transversale de soutien et de blocage 11 des trains de roues de la voiture transportée.

Le plateau possède en outre par exemple le long de ses longerons, des structures d'accrochage ou de coulissement destinées à coopérer avec des ensembles de levage ou de manutention qui permettent de soutenir le plateau et de le rendre mobile selon diverses combinaisons de mouvements de base.

Ces plateaux sont animés de mouvements composés entre diverses positions extrêmes conditionnées par le rapprochement maximal des voitures entre elles qui déterminent ainsi la capacité maximale du véhicule porte-voitures.

Selon le premier mode de réalisation, la structure de soutien et de blocage est un ensemble 12, formé par deux barres transversales 13 et 14 solidarisées aux longerons adjacents à écartement constant.

Bien entendu, l'ensemble 12 peut être fixe ou mobile le long des longerons.

L'écartement de ces barres est prévu pour assurer le blocage de toutes les roues des voitures existantes et un abaissement de la partie correspondante de la voiture.

Une variante supplémentaire représentée sur les figures 3 et 4 comporte une structure transversale de soutien et de blocage sous la forme d'un couple de pinces 15 et 16 se faisant face comprenant chacune deux bras pivotants 17 et 18, reliés entre eux ou indépendants dont l'écartement est fixe ou règlable.

Comme précédemment, la structure de soutien et de blocage ci-dessus peut être fixe ou déplaçable le long des longerons par tous moyens appropriés.

Les bras indépendants peuvent venir s'accrocher sur une structure d'indexation 19, par exemple à trous 20, prévue sur chaque longeron et représentée à titre d'exemple sur la figure 3.

Une variante supplémentaire représentée sur les figures 5 et 6 comporte une structure transversale de soutien et de blocage sous la forme d'une traverse 21 fixe ou déplaçable équipée à l'endroit des roues de deux cales 22 et 23 à sabots pivotants tels que 24 et 25 par exemple conformés en cadres.

Une autre variante intéressante représentée sur les figures 7 à 10 concerne un plateau à structure centrale escamotable 26 venant obturer l'évidement central dans une position de soutien ou le dégager dans une position escamotée.

Plus particulièrement, la structure centrale est du type à platelage central 27 monté sur glissières incurvées telles que 28. Le plateau comporte deux platelages d'extrémité 29 et 30. Le platelage central 27 vient s'escamoter sous l'un des deux platelages d'extrémité.

Ce type de plateau permet de réaliser successivement un plan de roulage lors de la constitution d'une rampe d'accès et ensuite un plateau porteur à gain d'encombrement par l'espace libre central. Ces deux fonctions lui confèrent un intérêt particulier dans les nouveaux véhicules porte-voitures à grande capacité.

Les figures de 11 à 17 ont pour but d'illustrer l'utilisation du plateau selon l'invention dans le cadre des véhicules porte-voitures et d'en démontrer tout l'intérêt pour ce type d'application.

Ce plateau cumule en effet de nombreux avantages en rapport direct avec cette utilisation. Il permet simultanément d'apporter une solution adaptée aux principales difficultés et les améliorations souhaitées tant au point de vue rapidité et facilités du chargement qu'au point de vue augmentation de capacité.

La figure 11 montre un exemple typique de chargement dans lequel on exploite au mieux le passage libre central et les zones de dégagement à l'avant et à l'arrière du plateau et des voitures transportées.

On remarque sur cette figure les imbrications multiples des voitures permettant d'arriver à l'augmentation de capacité visée.

Les figures suivantes de 12 à 17 montrent de façon schématique et simplifiée le gain en encombrement et en espace disponible entre les différentes variantes.

Ainsi, entre les plateaux pleins, de longueur égale à celle de la voiture ou de son empattement, (figures 13 et 14) et les plateaux à évidement central, on gagne un volume central référencé 36 permettant d'accueillir l'une ou l'autre forme de carrosserie d'une voiture : pavillon, capot, coffre.

Les gains supplémentaires en encombrement et en espace disponible proviennent d'une part du dégagement à l'avant et à l'arrière de la voiture selon des zones de dégagement avant 37 et arrière 38 au-delà des roues et d'autre part du soutien ponctuel de l'un, de l'autre ou des deux trains de roues avec possibilité de déplacement longitudinal de règlage de ce soutien.

Un gain supplémentaire peut être obtenu par un soutien double latéral pour lequel les éléments de soutien ne constituent pas une surépaisseur sur laquelle s'appuie la roue et permettent donc l'abaissement correspondant du véhicule.

Ce gain se traduit bien entendu directement en possibilité de rapprochement des véhicules transportés.

Un autre avantage du plateau selon l'invention et de ses différentes variantes consiste à permettre avec d'autres plateaux, par succession-imbrication, la constitution d'une rampe d'accès 39 aux emplacements les plus éloignés comme le montre de façon illustrative mais nullement limitative la figure 17.

## Revendications

1. Plateau porteur individuel pour ensembles porteurs et de levage d'un véhicule sur une unité porte-véhicules, plateau constitué d'une structure générale en cadre formé à partir de deux longerons (2) et (3), présentant à l'une de ses extrémités un platelage (9) et à son autre extrémité une structure transversale (11) de soutien des roues, l'espace situé entre le platelage (9) et la structure transversale (11) étant un évidement (10) définissant en position centrale un espace laissé libre quel que soit l'empattement du véhicule porté et étant délimité par les deux longerons (2) et (3) du cadre, et les limites adjacentes de fin de platelage et de la structure transversale (11), ledit platelage (9) et ladite structure transversale (11) étant disposés de façon à libérer au moins une zone de dégagement (37) ou (38) à l'une de ses extrémités, zone de dégagement définie par l'espace entre la limite extrême du platelage (9) ou de la structure transversale (11) et les parties en porte-à-faux du véhicule porté afin de rendre cette zone de dégagement disponible pour son occupation par la ou les extrémités du ou des véhicules voisins ou inférieurs en vue d'améliorer l'imbrication des véhicules ainsi transportés.

2. Plateau selon la revendication 1, caractérisé en ce que la combinaison de la longueur du platelage (9) avec la position de la structure (11) est telle qu'elle permet d'absorber les différences d'empattement de tous les véhicules portés.

3. Plateau selon la revendication 2, caractérisé en ce que la structure (11) a une position fixe et le platelage est de longueur suffisante pour absorber les différences d'empattement de tous les véhicules portés.

4. Plateau selon la revendication 2, caractérisé en ce que la structure (11) est mobile et le platelage de longueur minimale pour absorber les différences d'empattement de tous les véhicules portés.

5. Plateau selon l'une quelconque des revendications précédentes, caractérisé en ce que la structure transversale (11) est un platelage.

6. Plateau selon l'une quelconque des revendications précédentes caractérisé en ce qu'il comporte une structure centrale escamotable (26) venant obturer ou dégager temporairement l'évidement central (10).

7. Plateau selon la revendication 6, caractérisé en ce que la structure centrale escamotable (26) est un platelage central (27) monté sur glissières.

8. Plateau porteur selon l'une quelconque des revendications précédentes caractérisé en ce que la zone de dégagement est une zone de dégagement avant (37) par rapport au véhicule porté.

9. Plateau porteur selon l'une quelconque des revendications précedentes 1 à 7, caractérisé en ce que la zone de dégagement est une zone de dégagement arrière (38) par rapport au véhicule porté.

10. Plateau porteur selon l'une quelconque des revendications précedentes de 1 à 7, caractérisé en ce qu'il comporte une zone de dégagement avant (37) et une zone de dégagement arrière (38) par rapport au véhicule porté.

11. Plateau selon l'une quelconque des revendications précédentes, caractérisé en ce que la structure transversale de soutien et de blocage (11) est un ensemble (12) formé de deux barres transversales (13) et (14) solidarisées aux longerons adjacents (2) et (3).

12. Plateau selon la revendication 11, caractérisé en ce que les barres (13) et (14) sont déplaçables.

13. Plateau selon l'une quelconque des revendications précedentes 1 à 9, caractérisé en ce que la structure transversale de soutien et de blocage (11) est un couple de pinces (15) et (16) se faisant face, comprenant chacune deux bras pivotants (17) et (18).

14. Plateau selon la revendication 13, caractérisé en ce que l'écartement des bras pivotants (17) et (18) est réglable.

15. Plateau selon les revendications 13 et 14, caractérisé en ce que les pinces (15) et (16) sont déplaçables.

16. Plateau selon l'une des revendications précedentes 1 à 9, caractérisé en ce que la structure transversale de soutien et de blocage (11) est une traverse (21) équipée à l'endroit des roues de deux cales (22) et (23) à sabots pivotants.

17. Plateau selon la revendication 16, caractérisé en ce que la traverse (21) est déplaçable.

## Claims

1. Individual carrying tray for assemblies for carrying and lifting a vehicle on a vehicle-transporter unit, the tray being constituted by a generally frame-like structure formed by two side members (2) and (3) and having a plate (9) at one of its ends and a transverse structure (11) for supporting the wheels at its other end, the space situated between the plate (9) and the transverse structure (11) being a cavity (10) defining, in a central position, a space which is left free whatever the wheelbase of the vehicle carried and which is defined by the two side members (2) and (3) of the frame and by the adjacent end boundaries of the plate and of the transverse structure (11), the said plate (9) and the said transverse structure (11) being arranged so as to leave free at least one clear region (37) or (38) at one of their ends, the clear region being defined by the space between the end boundary of the plate (9) or of the transverse structure (11) and the overhanging portions of the vehicle carried in order to make this clear region available for occupation by the end or ends of the adjacent or lower vehicle or vehicles in order to improve the overlapping of the vehicles thus transported.

2. Tray according to Claim 1, characterized in that the combination of the length of the plate (9) with the position of the structure (11) is such that it enables the differences in the wheelbases of all of the vehicles carried to be absorbed.

3. Tray according to Claim 2, characterized in that the structure (11) has a fixed position and the plate is of sufficient length to absorb the differences in the wheelbases of all of the vehicles carried.

4. Tray according to Claim 2, characterized in that the structure (11) is movable and the plate is of minimal length for absorbing the differences in the wheelbases of all of the vehicles carried.

5. Tray according to any one of the preceding claims, characterized in that the transverse structure (11) is a plate.

6. Tray according to any one of the preceding claims, characterized in that it includes a central retractable structure (26) which temporarily obstructs or clears the central cavity (10).

7. Tray according to Claim 6, characterized in that the central retractable structure (26) is a central plating (27) mounted on sliding rails.

8. Carrying tray according to any one of the preceding claims, characterized in that the clear region is a front clear region (37) with respect to the vehicle carried.

9. Carrying tray according to any one of the preceding Claims 1 to 7, characterized in that the clear region is a rear clear region (38) with respect to the vehicle carried.

10. Carrying tray according to any one of the preceding Claims 1 to 7, characterized in that it includes a front clear region (37) and a rear clear region (38) with respect to the vehicle carried.

11. Tray according to any one of the preceding claims, characterized in that the transverse support and locking structure (11) is an assembly (12) formed by two transverse bars (13) and (14) fixed to the adjacent side members (2) and (3).

12. Tray according to Claim 11, characterized in that the bars (13) and (14) are movable.

13. Tray according to any one of the preceding claims 1 to 9, characterized in that the transverse support and locking structure (11) is a pair of facing clamps (15) and (16) each comprising two pivoting arms (17) and (18).

14. Tray according to Claim 13, characterized in that the spacing of the pivoting arms (17) and (18) is adjustable.

15. Tray according to Claims 13 and 14, characterized in that the clamps (15) and (16) are movable.

16. Tray according to any one of the preceding Claims 1 to 9, characterized in that the transverse support and locking structure (11) is a cross member (21) equipped with two cradles (22) and (23) with pivoting shoes in the locality of the wheels.

17. Tray according to Claim 16, characterized in that the cross member (21) is movable.

## Patentansprüche

1. Einzelladefläche für Ladeeinheiten und zum Heben eines Fahrzeuges auf einer einheitlichen Fahrzeug-transport-Einheit, wobei die Einzelladefläche aus einer zwei Längsträger (2,3) aufweisenden, allgemein rahmenförmigen Struktur gebildet ist, die an einem ihrer Enden einen Plattenbelag (9) und an ihrem anderen Ende eine Querstruktur (11) zur Halterung der Räder zeigt, wobei der Raum zwischen dem Plattenbelag (9) und der Querstruktur (11) eine Aussparung (10) ist, die, zentral angeordnet, einen - welch auch der Radstand des transportierten Fahrzeuges sein mag - freigelassenen Raum definiert, und die durch die zwei Längsträger (2,3) des Rahmens und durch die benachbarten Begrenzungen des Endes des Plattenbelages (9) und der Querstruktur (11) begrenzt wird, wobei der Plattenbelag (9) und die Querstruktur (11) so angeordnet sind, daß sie wenigstens eine Freigabezone (37) oder (38) an einem Ende freimachen, wobei die Freigabezone durch den Raum zwischen dem äußeren Ende des Plattenbelages (9) oder der Querstruktur (11) und den überstehenden Bauten des transportierten Fahrzeugges definiert ist, um diese Freigabezone für die Besetzung durch die äußere(n) Begrenzung(en) des oder der benachbarten oder unteren Fahrzeuge hinsichtlich einer verbesserten Verschachtelung der so transportierten Fahrzeuge zugänglich zu machen.

2. Ladefläche nach Anspruch 1, dadurch gekennzeichnet, daß die Kombination der Länge des Plattenbelages (9) mit der Position der Struktur (11) es erlaubt, die Unterschiede des Radstandes bei allen geladenen Fahrzeugen auszugleichen.

3. Ladefläche nach Anspruch 2, dadurch gekennzeichnet, daß die Struktur (11) fest angeordnet ist und der Plattenbelag ausreichende Länge besitzt, um die Unterschiede des Radstandes bei allen geladenen Fahrzeugen auszugleichen.

4. Ladefläche nach Anspruch 2, dadurch gekennzeichnet, daß die Struktur (11) beweglich ist und der Plattenbelag (9) die kleinste Länge aufweist, um die Unterschiede des Radstandes bei allen geladenen Fahrzeugen auszugleichen.

5. Ladefläche nach einem der vorangehenden Ansprüche, dadurch gekennzeichnet, daß die Querstruktur (11) ein Plattenbelag ist.

6. Ladefläche nach einem der vorangehenden Ansprüche, dadurch gekennzeichnet, daß sie eine einziehbare zentrale Struktur (26) umfaßt, die zeitweise die zentrale Aussparung (10) verdeckt oder freimacht.

7. Ladefläche nach Anspruch 6, dadurch gekennzeichnet, daß die zentrale einziehbare Struktur (26) ein zentraler, auf Laufschienen montierter Plattenbelag (27) ist.

8. Ladefläche nach einem der vorangehenden Ansprüche, dadurch gekennzeichnet, daß die Freigabezone eine in bezug auf das geladene Fahrzeug vordere Freigabezone (37) ist.

9. Ladefläche nach einem der vorangehenden Ansprüche 1-7, dadurch gekennzeichnet, daß die Freigabezone eine in bezug auf das geladene Fahrzeug hintere Freigabezone (38) ist.

10. Ladefläche nach einem der vorangehenden Ansprüche 1-7, dadurch gekennzeichnet, daß sie eine in bezug auf das geladene Fahrzeug vordere (37) und eine hintere Freigabezone (38) aufweist.

11. Ladefläche nach einem der vorangehenden Ansprüche, dadurch gekennzeichnet, daß die Querstruktur (11) für die Halterung und für die Blockierung eine aus zwei von den angrenzenden Längsträgern (2, 3) getragenen Querstangen (13, 14) gebildete Einheit (12) ist.

12. Ladefläche nach Anspruch 11, dadurch gekennzeichnet, daß die Querstangen (13, 14) versetzbar sind.

13. Ladefläche nach einem der vorangehenden Ansprüche 1-9, dadurch gekennzeichnet, daß die Querstruktur für die Halterung und für die Blockierung (11) ein sich gegenüberliegendes Klauenpaar (15, 16) ist, die jeder zwei schwenkbare Arme (17, 18) aufweisen.

14. Ladefläche nach Anspruch 13, dadurch gekennzeichnet, daß der Abstand der schwenkbaren Arme (17, 18) verstellbar ist.

15. Ladefläche nach den Ansprüchen 13 und 14, dadurch gekennzeichnet, daß die Klauen (15, 16) versetzbar sind.

16. Ladefläche nach einem der vorangehenden Ansprüche 1-9, dadurch gekennzeichnet, daß die Querstruktur (11) für die Halterung und für die Blockierung eine Querstrebe (21) ist, die am Ort der Räder mit zwei drehbaren Hemmschuhen (22, 23) ausgerüstet ist.

17. Ladefläche nach Anspruch 16, dadurch gekennzeichnet, daß die Querstrebe (21) versetzbar ist.
